# EUROPEAN PATENT SPECIFICATION

(11) **EP 3 320 285 B1**
(45) Date of publication and mention of the grant of the patent: **08.05.2019**
(21) Application number: 16741145.3
(22) Date of filing: 29.06.2016
(51) Int. Cl.: F27B 3/19, C21C 5/52, F27D 3/15

(54) **AN ELECTRIC ARC FURNACE WITH AN ANGLED ECCENTRIC BOTTOM TAP-HOLE AND A TAPPING PROCESS USING THE ELECTRIC ARC FURNACE**
LICHTBOGENOFEN MIT ANGEWINKELTEM EXZENTRISCHEM BODENGIESSLOCH UND GIESSVERFAHREN UNTER VERWENDUNG DES LICHTBOGENOFENS
FOUR À ARC ÉLECTRIQUE AYANT UN TROU DE COULÉE PAR LE FOND EXCENTRIQUE ET INCLINÉ AINSI QUE PROCÉDÉ DE COULÉE UTILISANT LE FOUR À ARC ÉLECTRIQUE

(30) Priority: 10.07.2015 US 201562191099 P
(43) Date of publication of application: 16.05.2018
(73) Proprietor: SABIC Global Technologies B.V., 4612 PX Bergen op Zoom (NL)
(72) Inventor: AL-HARBI, Mansour, Jubail 31961 (SA)
(74) Representative: Patentanwälte Bressel und Partner mbB
(86) International application number: PCT/IB2016/053908
(87) International publication number: WO 2017/009731

(56) References cited:
- EP-A1- 1 850 081
- DE-A1- 4 244 228
- US-A1- 2007 119 275
- US-A1- 2013 320 601

## Description

### CROSS-REFERENCE TO RELATED APPLICATIONS

### BACKGROUND OF THE DISCLOSURE

### TECHNICAL FIELD

The present disclosure relates to an electric arc furnace with an angled eccentric bottom tap-hole and a process for tapping the electric arc furnace when it contains a molten metal.

### DESCRIPTION OF RELATED ART

In a steelmaking operation, the steel is made in the presence of a steelmaking slag, which can comprise oxides of metals, including calcium, silicon, iron, magnesium, aluminum, manganese, and/or the like. Primary slag may have a higher oxygen content than acceptable steel prior to casting, and therefore it is often not suitable for further steel refining operations. It is preferable not to let this slag flow from the furnace into a collection vessel, since it may be harmful in the next step of steel refining, e.g., a step that includes reducing. Since both the slag and the steel are molten, e.g., flowable materials, it may be difficult to prevent the entrainment of at least some slag in the flowing steel over the entire range of conditions that occur during tapping as the steel flows out of the tapping port. Attempts are usually made to eliminate slag from refining processes, either by retention of the slag in the steelmaking furnace as much as possible, or by raking the slag from the surface of the steel in the collection vessel, or both.

Historically, steel was commonly tapped from an electric arc furnace through a tapping spout in the side of the furnace. This method resulted in substantial quantities of slag pouring from the furnace along with the steel. More recently, steelmaking furnaces with an eccentric bottom tap-hole, or "EBT," have been used to tap a furnace to provide steel with a reduced amount of slag carryover from the furnace during tapping [Fuchs, G. et al. US4,592,067; Kemeny, F. et al. US7,468,090; Huber et al EP2,280,088; Robinson, S. et al. US7,914,602 and DE 42 44 228 A1.

### BRIEF SUMMARY OF THE DISCLOSURE

Such an existing EBT is in a vertical orientation when the furnace is at an initial position prior to tilting, and upon tilting the furnace, the EBT adopts a non-vertical orientation throughout the majority of the tapping process. Such an EBT can have several drawbacks, including a short service life of the EBT due to erosion over time, as well as variable slag carryover. For example, an older tap-hole that has eroded to a larger inside diameter tends to entrain more slag than a newer tap-hole having a smaller inside diameter. In view of the forgoing, one aspect of the present disclosure is to provide an electric arc furnace with an angled eccentric bottom tap-hole to mitigate tap-hole erosion and slag carryover. A process for tapping an electric arc furnace containing a molten metal is also disclosed.

According to a first aspect, the present invention according to independent claim 1 relates to an electric arc furnace which includes a body comprising an eccentric bottom tap-hole which connects an inner surface of the body through a top aperture to an outer surface of the body through a bottom aperture, and a tilting device which tilts the body of the electric arc furnace to an electric arc furnace tilting angle. The angle of the eccentric bottom tap-hole through the body of the electric arc furnace is greater than 15° and less than 50°, where the angle of the bottom tap-hole through the body is defined with respect to an axis that is perpendicular to the bottom surface of the body.

In one embodiment, the angle of the bottom tap-hole through the body is greater than 15° and less than 35°.

In one embodiment, the eccentric bottom tap-hole has a longest length of 80 to 120 cm.

In one embodiment, the eccentric bottom tap-hole is in the form of a cylinder, where the top aperture and the bottom aperture have substantially the same diameter.

In one embodiment, the cylindrical eccentric bottom tap-hole has a diameter of about 10 to 30 cm.

In one embodiment, the eccentric bottom tap-hole is in the form of a cone where the top aperture has an diameter that is larger than a diameter of the bottom aperture. In another embodiment, the eccentric bottom tap-hole is in the form of a cone where the bottom aperture has a diameter that is larger than a diameter of the top aperture.

In one embodiment, the eccentric bottom tap-hole is curved.

In one embodiment, the eccentric bottom tap-hole has an oblong shape (e.g., rectangular or ellipsoidal in cross-section).

In one embodiment, the electric arc furnace has a plurality of eccentric bottom tap-holes. In one embodiment, the electric arc furnace has a first eccentric bottom tap-hole for draining the metal and a second tap-hole located on the side of the electric arc furnace that can be used to drain slag from the furnace.

In one embodiment, the electric arc furnace comprises a bidirectional slide gate valve located on the outer surface of the body proximal to the eccentric bottom tap-hole, wherein the bidirectional slide gate valve is configured to adjust (e.g., fully close, partially close, fully open, partially open, and/or the like) the bottom aperture of the eccentric bottom tap-hole.

In one embodiment, the electric arc furnace comprises a sensor for detecting a level (e.g., depth) of a molten metal disposed above the eccentric bottom tap-hole.

In one embodiment, the eccentric bottom tap-hole is disposed in a removable unit that is configured to be releasably attached to the body to form a (e.g., molten metal-tight) seal, where, optionally, when the removable unit is attached to the body, an inner surface of the removable unit is flush with the inner surface of the body and/or an outer surface of the removable unit is flush with the outer surface of the body.

According to a second aspect, the present invention according to independent claim 11 relates to a process including:
i) tilting the electric arc furnace, in one or more of its embodiments, containing a molten metal at an electric arc furnace tilting angle; and ii) tapping the molten metal into a vessel through the eccentric bottom tap-hole provided on the electric arc furnace, wherein the electric arc furnace tilting angle is substantially equal to the angle of the eccentric bottom tap-hole through the body of the electric arc furnace during the tapping, wherein the electric arc furnace tilting angle and the angle of the eccentric bottom tap-hole (103) are from 15° to 35°.

In one embodiment, the molten metal is steel.

In one embodiment, the electric arc furnace tilting angle and the angle of the eccentric bottom tap-hole are from 5° to 45°. In one embodiment, the electric arc tilting angle for a 140 to 200 ton capacity electric arc furnace is greater than 5° and less than 20°.

In one embodiment, a time required to tilt the electric arc furnace to an electric arc furnace tilting angle that is substantially equal to the angle of the eccentric bottom tap-hole is less than 80% of the total time necessary to complete the tapping (e.g., such that substantially all of the molten metal has flowed out of the furnace).

In one embodiment, at least 40% of the molten metal passes through the eccentric bottom tap-hole when the eccentric bottom tap-hole is in a substantially vertical orientation.

According to a third aspect, the present disclosure relates to a process involving: i) tilting the electric arc furnace, in one or more of its embodiments, containing a molten metal at an electric arc furnace tilting angle; ii) adjusting the bidirectional slide gate valve to control a flow rate of the molten metal from the eccentric bottom tap-hole; and iii) tapping the molten metal into a vessel through the eccentric bottom tap-hole provided on the electric arc furnace, wherein the electric arc furnace tilting angle is substantially equal to the angle of the eccentric bottom tap-hole through the body of the electric arc furnace during the tapping.

In one embodiment, a time required to tilt the electric arc furnace to an electric arc furnace tilting angle that is substantially equal to the angle of the eccentric bottom tap-hole is less than 80% of the total time necessary to complete the tapping.

In one embodiment, at least 40% of the molten metal passes through the eccentric bottom tap-hole when the eccentric bottom tap-hole is in a substantially vertical orientation.

In one embodiment, the flow rate ranges from 30 to 60 tons/minute.

The terms "a" and "an" are defined as one or more unless this disclosure explicitly requires otherwise. The term "substantially" is defined as largely, but not necessarily wholly, what is specified (and includes what is specified; e.g., substantially 90 degrees includes 90 degrees and substantially parallel includes parallel), as understood by a person of ordinary skill in the art. In any disclosed embodiment, the terms "substantially," "approximately," and "about" may be substituted with "within [a percentage] of' what is specified, where the percentage includes .1, 1, 5, and 10 percent.

Further, a device or system that is configured in a certain way is configured in at least that way, but it can also be configured in other ways than those specifically described.

The terms "comprise" (and any form of comprise, such as "comprises" and "comprising"), "have" (and any form of have, such as "has" and "having"), "include" (and any form of include, such as "includes" and "including"), and "contain" (and any form of contain, such as "contains" and "containing") are open-ended linking verbs. As a result, an apparatus that "comprises," "has," "includes," or "contains" one or more elements possesses those one or more elements, but is not limited to possessing only those elements. Likewise, a method that "comprises," "has," "includes," or "contains" one or more steps possesses those one or more steps, but is not limited to possessing only those one or more steps.

Any embodiment of any of the apparatuses, systems, and methods can consist of or consist essentially of - rather than comprise/include/contain/have - any of the described steps, elements, and/or features. Thus, in any of the claims, the term "consisting of' or "consisting essentially of' can be substituted for any of the open-ended linking verbs recited above, in order to change the scope of a given claim from what it would otherwise be using the open-ended linking verb.

The feature or features of one embodiment may be applied to other embodiments, even though not described or illustrated, unless expressly prohibited by this disclosure or the nature of the embodiments.

Some details associated with the embodiments are described above and others are described below.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:

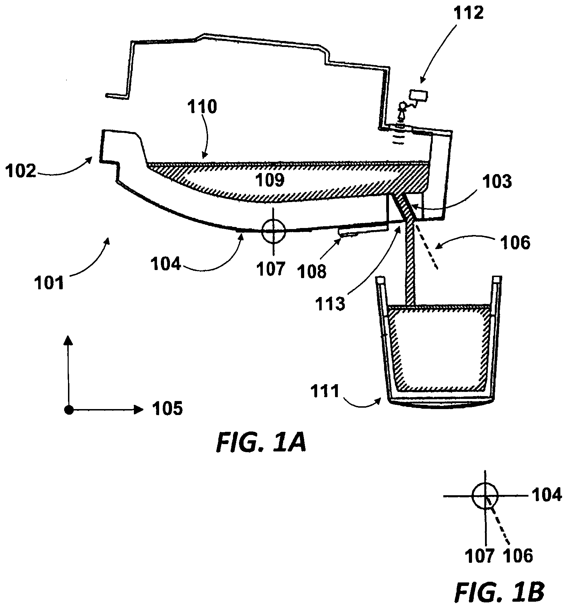

**Fig. 1A** is an illustration of an electric arc furnace in an initial position prior to tilting.
**Fig. 1B** is an illustration of an electric arc furnace tilting angle and an angle of the eccentric bottom tap-hole through the body of the electric arc furnace prior to tilting.
**Fig. 2A** is an illustration of an electric arc furnace in a tilted position during a tapping operation.
**Fig. 2B** is an illustration of an electric arc furnace tilting angle and an angle of the eccentric bottom tap-hole through the body of the electric arc furnace during a tapping operation.
**Fig. 3A** is an illustration of an electric arc furnace having a pivotable eccentric bottom tap-hole, shown in an initial position.
**Fig. 3B** is an illustration of the electric arc furnace of Fig. 3A, shown in a tilted position.

### DETAILED DESCRIPTION

According to a first aspect, the present disclosure relates to an electric arc furnace 101 which includes a body 102 comprising an eccentric bottom tap-hole 103 which connects an inner surface of the body through a top aperture to an outer surface of the body through a bottom aperture, and a tilting device which tilts the body of the electric arc furnace to an electric arc furnace tilting angle.

An electric arc furnace 101 of the present disclosure is a furnace that heats material by means of an electric arc. Industrial arc furnaces range in size from small units of approximately one ton capacity (e.g., used in foundries for producing cast iron products) up units of approximately 400 ton capacity (e.g., used for secondary steelmaking). Industrial electric arc furnace temperatures can be up to 1,800 °C, and certain laboratory electric arc furnace temperatures can exceed 3,000 °C. An electric arc furnace used for steelmaking can comprise a refractory-lined body, which is usually water-cooled in larger sizes, covered with a removable roof through which one or more electrodes can enter the furnace. A refractory material of an electric arc furnace can be chemically and physically stable at high temperatures. A refractory material used in an electric arc furnace of the present disclosure may be, but is not limited to, an oxide of aluminum, silicon, magnesium, zirconium, calcium, and/or the like, as well as a fire clay, a binary or ternary compound such as tungsten carbide, boron nitride, hafnium carbide, tantalum hafnium carbide, and/or the like, or a mixture thereof. Such heat resistant materials may be present throughout an entire electric arc furnace, throughout some of the electric arc furnace, or in certain components of the electric arc furnace. For instance, refractory materials may be used to line an entire furnace or to line only portions of the furnace that come into contact with molten metal. Further, such heat resistant refractory materials may be used to provide a protective layer for components that come into continuous contact with molten metal. For example, an eccentric bottom tap-hole may be subjected to continuous contact with molten metal; therefore it may be advantageous to line at least a portion of the eccentric bottom tap-hole with a refractory material. A non-limiting example of an electrode of an electric arc furnace is a graphite electrode, although other types of electrodes may be used. In one embodiment, the bottom (e.g., the inside and/or outside surface thereof) of an electric arc furnace may be curved. In one embodiment, the bottom of the electric arc furnace may be flat or squared. The shapes and sizes of the disclosed electric arc furnaces are non-limiting, as electric arc furnaces having various shapes and sizes may be suitable for use in connection with the present disclosure. Other components of an electric arc furnace are well known to those of ordinary skill in the art.

As used herein, "tapping" refers to the transferring of a molten metal from an electric arc furnace to a second vessel, such as a ladle or transfer dolly, by an operation that involves tilting the furnace. Tapping may refer to a partial transfer or a complete transfer of the molten metal. Therefore, tapping may involve transferring at least 10%, at least 20%, at least 30%, at least 40%, at least 50%, at least 60%, at least 70%, at least 80%, at least 90%, or more of the volume or weight of molten metal from the electric arc furnace to a second vessel.

A "tap-hole" is an opening in an electric arc furnace through which metal, slag, or both can exit the furnace. A "bottom tap-hole" is an opening in the bottom of an electric arc furnace through which molten metal can flow, primarily by the action of gravity, and thus be drained from the furnace. Such a bottom tap hole of a furnace may be off-center or "eccentric" (e.g., disposed closer to a first side of the furnace than to a second side of the furnace that is opposite the first side) to facilitate tapping of the furnace through a tilting operation. In one embodiment, the eccentric bottom tap-hole is located on the bottom of the furnace proximal to a sidewall of the furnace. Preferably, the EBT is proximal to a sidewall of the furnace that is furthest displaced when the furnace is tilted from an initial starting position (e.g., furthest from a pivoting axis of the furnace). In one embodiment, the EBT is located at a position on the bottom of the furnace that is at least 60%, at least 70%, at least 80%, or at least 90% of the total length of the bottom of the furnace, where 0% corresponds to a first side of the furnace that is closest to the pivoting axis of the furnace and 100% corresponds to a second side of the furnace that is opposite the first side.

In one embodiment, eccentric bottom tap-hole 103 has a longest length of 80 to 120 cm, preferably 85 to 115 cm, or more preferably 90 to 110 cm.

In one embodiment, the eccentric bottom tap-hole is in the form of a cylinder, where the top aperture and the bottom aperture have substantially the same diameter. In one embodiment, the cylindrical eccentric bottom tap-hole has a diameter of about 10 to 30 cm, preferably about 14 to 26 cm, or more preferably about 18 to 22 cm.

In one embodiment, the eccentric bottom tap-hole is in the form of a cone, where the top aperture has a diameter that is larger than a diameter of the bottom aperture. In another embodiment, the eccentric bottom tap-hole is in the form of a cone, where the bottom aperture has a diameter that is larger than a diameter of the top aperture.

In one embodiment, the eccentric bottom tap-hole is curved.

In one embodiment, the eccentric bottom tap-hole has an oblong shape.

In one embodiment, the electric arc furnace has a plurality of eccentric bottom tap-holes. In such embodiments, the plurality of eccentric bottom tap-holes may be located at different positions on the bottom of the furnace and may have different shapes and/or sizes (e.g., diameters, etc.). In one embodiment, the electric arc furnace has a first eccentric bottom tap-hole for draining the metal and a second tap-hole located on the side of the electric arc furnace that can be used to drain slag from the furnace.

In one embodiment, the eccentric bottom tap-hole comprises or is lined with a refractory material. Such a refractory material may be, but is not limited to, an oxide of aluminum, silicon, magnesium, zirconium, calcium, and/or the like, as well as a fire clay, a binary or ternary compound such as tungsten carbide, boron nitride, hafnium carbide, tantalum hafnium carbide, and/or the like, or a mixture thereof.

The diameter of the EBT may be a fraction of the length of the EBT. For example the diameter of the EBT may be 1/50, 1/40, 1/30, 1/20, 1/15, 1/10, 1/5, or 1/2 of the length of the EBT.

An electric arc furnace of the present disclosure may be tilted over a range of angles from a horizontal position by the use of a tilting device, which can include, but is not limited to including, motor(s), gear(s), chain drive(s), hydraulics, and/or the like. As used herein, the term "electric arc furnace tiling angle" may refer to the angle between a horizontal plane 105 and a reference plane 104 that is tangent to the bottom surface of the body of the furnace, wherein, when the furnace is in a non-tilted or 0° position, the reference plane may be substantially parallel to the horizontal plane and/or to an upper surface of molten metal disposed within the furnace. The electric arc furnace tilting angle may (e.g., also) be described as the difference between the angle of the furnace at a designed resting position and an angle of the furnace at a tilted position; for example, where the tilting angle represents rotational displacement of the furnace from the resting or 0° position.

The angle of the eccentric bottom tap-hole through the body of the electric arc furnace may be defined with respect to an axis 106 of the eccentric bottom tap-hole. Axis 106 may be a longitudinal axis of the eccentric bottom tap-hole, an axis that intersects both the centroid of the entrance aperture of the eccentric bottom tap-hole and the centroid of the exit aperture of the eccentric bottom tap-hole, and/or the like. The angle of the eccentric bottom tap-hole may be such that axis 106 forms an angle with a reference axis 107 that is perpendicular to the bottom surface of the furnace; for example, perpendicular to reference plane 104. In one embodiment, the angle of the eccentric bottom tap-hole is greater than 0°, preferably greater than 5°, more preferably greater than 10°, more preferably great than 15°, or even more preferably greater than 20°, and less than 50°, preferably less than 40°, more preferably less than 30°, even more preferably less than 25°, or even more preferably less than 20°. The eccentric bottom tap-hole may be defined such that an angle between axis 106 and a vertical axis is reduced across a majority of the range of motion of the furnace from the non-tilted position to the fully tilted position. The eccentric bottom tap-hole may be defined such that the exit aperture of the tap-hole is closer to a side of the furnace that is furthest displaced when the furnace is titled from an initial starting position than is the entrance aperture of the tap-hole.

In one embodiment, the electric arc furnace comprises a bidirectional slide gate valve 108 located on the outer surface of the body proximal to the eccentric bottom tap-hole, wherein the bidirectional slide gate valve is configured to adjust the bottom aperture of the eccentric bottom tap-hole. The bidirectional slide gate valve may therefore be used to prevent molten metal transfer (e.g., the bidirectional slide gate valve may operate as an open/close mechanism) and/or to control flow through the eccentric bottom tap-hole. In terms of the bidirectional slide gate valve, "bidirectional" refers to the ability of the slide gate valve to move in a first direction relative to the body of the furnace to increase the cross sectional area of the bottom aperture through which molten metal can flow and increase the tapping rate, or in a second direction relative to the body of the furnace to decrease the cross sectional area of the bottom aperture through which molten metal can flow and decrease the tapping rate. Bidirectional slide gate valve 108 is exemplary; it is envisioned that any suitable valve may be used to control flow of molten metal through a bottom tap-hole of the present disclosure. Such a valve can include, but is not limited to, a ball valve, a diaphragm valve, a needle valve, a butterfly valve, a plug valve, and/or the like.

"Molten metal" may be the liquid or molten form of iron, steel, calcium carbide, a ferroalloy (e.g. ferroaluminum, ferrochromium, ferronickel, and/or the like), a non-ferrous metal (e.g. aluminum, copper, lead, nickel, tin, titanium, zinc, bronze, brass, and/or the like), or a combination thereof. Molten metal may also include slag, which is often a byproduct of processes that convert solid metal into molten metal. The term "slag" means non-steel byproduct that is often produced in a steel making furnace and is typically present as a molten material that floats on top of the molten steel. Slag may comprise a metal oxide, a metal sulfide, calcium oxide, magnesium oxide, magnesite, dolomite, iron oxide, aluminum oxide, manganese oxide, silica, sulfur, phosphorous, or a combination thereof.

In one embodiment, molten metal 109 comprises steel. Steel is an alloy of iron and carbon that is widely used in construction and other applications because of its high tensile strength and low cost. Carbon, other elements, and inclusions within iron act as hardening agents by preventing movement of dislocations that naturally exist in the iron atom crystal lattices. Carbon in typical steel alloys may contribute up to 2.1% of the weight of the steel alloys. Steel material suitable for use with the present disclosure may comprise any of the broadly categorized steel compositions, including carbon steels, alloy steels, stainless steels, and tool steels. Carbon steels contain trace amounts of alloying elements and account for approximately 90% of total steel production. Carbon steels can be further categorized into three groups depending on their carbon content: low carbon steels/mild steels may contain up to 0.3% carbon, medium carbon steels may contain 0.3 - 0.6% carbon, and high carbon steels may contain more than 0.6% carbon. Alloy steels contain alloying elements (e.g., manganese, silicon, nickel, titanium, copper, chromium, aluminum, and/or the like) in varying quantities, which can be used to manipulate a steel's properties, such as its hardenability, corrosion resistance, strength, formability, weldability, and/or ductility. Stainless steels generally contain between 10-20% chromium as the main alloying element and are valued for their high corrosion resistance. With over 11% chromium, stainless steel is about 200 times more resistant to corrosion than mild steel. Stainless steels can be divided into three groups based on their crystalline structure: austenitic steels, ferritic steels, and martensitic steels. Tool steels contain tungsten, molybdenum, cobalt, and/or vanadium in varying quantities to increase heat resistance and durability, making tool steel well suited for cutting and drilling equipment.

Various types of scrap metal can be heated in an electric arc furnace to produce molten metal, including shred scrap metal, heavy melt metal, direct reduced iron, pig iron, and/or the like. With regard to steelmaking, scrap metal that is converted into a molten state using a furnace may produce molten metal 109 as well as a layer of slag 110, which floats on the surface of the molten metal.

Care is often taken to minimize the disturbance of molten metal in the furnace and/or to minimize the slag carryover during the tapping of the furnace into a second vessel 111. As used herein, "slag carryover" refers to the transfer of slag from a steel making furnace to a second vessel through an eccentric bottom tap-hole of the furnace, wherein the slag is entrained with and/or follows after the molten steel and is thus "carried over" into the second vessel.

In one embodiment, the electric arc furnace comprises a sensor 112 configured to capture data indicative of a level of molten metal above the eccentric bottom tap-hole. Such a sensor may include, but is not limited to, a camera, such as a charge-coupled device camera, or a microwave distance camera. The sensor may be located above the molten metal within the furnace such that the sensor captures data indicative of the distance between the sensor and the surface of the molten metal. Sensors may optionally be used to measure the composition of molten metal flowing from the eccentric bottom tap-hole (e.g., in order to determine the amount of slag carryover). An arc-emission spectrometer is one example of a sensor that may be used to measure metal composition and/or to determine slag carryover.

In one embodiment, the eccentric bottom tap-hole is disposed in a removable unit 113, and the removable unit is configured to be releasably attached to the body to form a seal. In one embodiment, an inner surface of the removable unit is flush with the inner surface of the body and/or an outer surface of the removable unit is flush with the outer surface of the body. The removable unit may be attached to the body by any suitable attachment method (e.g., so long as a seal is formed), such as, for example, by weld(s), bolt(s), screw(s), socket(s), and/or the like. It is therefore envisaged that the removable unit can be replaced without replacing the entire electric arc furnace. In this way, the tap-hole angle can be changed by replacing a removable unit 113 having a first tap-hole angle (e.g., 20°) with a removable unit having a second tap-hole angle (e.g., 30°) that is different than the first tap-hole angle. By doing so, the flow rate that occurs during tapping of the furnace may be varied, which may lead to changes in the composition of the output molten metal (e.g., a faster flow rate may lead to increased slag carryover and a less pure steel composition). It may be advantageous to provide for steel products having a spectrum of purities for use in differing applications. Further, the removable unit may allow for easy replacement of the tap-hole in the event of tap-hole erosion over time.

According to a second aspect, the present disclosure relates to a process including: i) tilting the electric arc furnace, in one or more of its embodiments, containing a molten metal at an electric arc furnace tilting angle; and ii) tapping the molten metal into a vessel through the eccentric bottom tap-hole provided on the electric arc furnace, wherein the electric arc furnace tilting angle is substantially equal to the angle of the eccentric bottom tap-hole through the body of the electric arc furnace during the tapping.

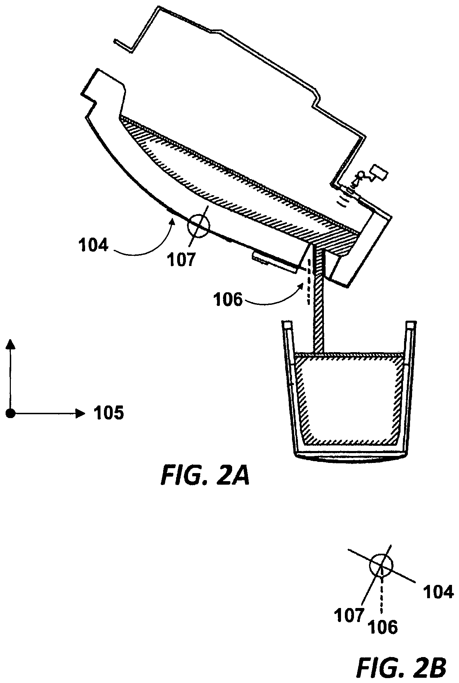

In one embodiment, the electric arc furnace tilting angle and the angle of the eccentric bottom tap-hole are from 5° to 45°, preferably from 10° to 40°, more preferably from 15° to 35°, or more preferably from 15° to 25°. In one embodiment, the electric arc furnace tilting angle is substantially equal to the angle of the eccentric bottom tap-hole, as depicted in Fig. 2A. For example, the electric arc furnace may start at an initial position with an electric arc furnace tilting angle of 0° and then be tilted until the electric arc tilting angle is substantially equal to the angle of the eccentric bottom tap-hole. In this way, the eccentric bottom tap-hole may be in a substantially vertical orientation after the tilting. As used herein, the term "vertical orientation" refers to the axis 106 of the eccentric bottom tap-hole being perpendicular to the horizontal plane 105. In one embodiment, the electric arc furnace comprises a 140 to 200 ton, preferably a 150 to 190 ton, or more preferably a 160 to 185 ton capacity electric arc furnace. In one embodiment, the electric arc furnace tilting angle is greater than 5°, preferably greater than 7°, or more preferably greater than 9°, and less than 20°, preferably less than 18°, or more preferably less than 16°.

Movement of an electric arc furnace from an initial position to a position in which the electric arc furnace tilting angle is substantially equal to the angle of the eccentric bottom tap-hole may occur continuously (e.g., at a substantially constant angular velocity) or in frequent small movements (e.g., such that the angular position of the furnace follows a stepped profile). For example, in one embodiment, the tapping is performed by continuously tilting the electric arc furnace at a rate of 1 degree every 1-20 seconds, every 2-15 seconds, or every 3-10 seconds. In the case of frequent discrete angle changes, each angle change between the start of rotation and the end of rotation is preferably no more than 5°, no more than 4°, no more than 3°, no more than 2°, no more than 1°, or no more than 0.5° of rotation, and the total number of rotation changes throughout the entire tapping process is at least 10, preferably at least 12, or more preferably at least 14. In one embodiment, the discrete angle changes are unequal to mitigate harmonic motion of the molten metal inside of the furnace. Once the tapping is completed, the electric arc furnace may be tilted back to the initial position (e.g., an electric arc furnace tilting angle of 0°).

In one embodiment, the process may be carried out by an operator that manually operates the tilting device. In one embodiment, the process may be computer-implemented; for example, the tilting of the furnace may be controlled by a processor or programmable logic controller. In such embodiments, the processor or programmable logic controller may command the tilting device to perform a sequence of small (equal or unequal) angular movements or a continuous angular movement.

In one embodiment, a time required to tilt the electric arc furnace to an electric arc furnace tilting angle that is substantially equal to the angle of the eccentric bottom tap-hole is less than 80%, preferably less than 70%, or more preferably less than 60% of the total time necessary to complete the tapping. The majority of the tapping process (whether by time or by volume and/or weight of molten metal) may occur with the electric arc furnace tilting angle being substantially equal to the angle of the eccentric bottom tap-hole.

In one embodiment, at least 40%, preferably at least 50%, more preferably at least 60%, or even more preferably at least 70% of the molten metal initially disposed within the furnace passes through the eccentric bottom tap-hole when the eccentric bottom tap-hole is in a substantially vertical orientation.

Tapping may be initiated at any angle of the electric arc furnace. In one embodiment, tapping is started before tilting the electric arc furnace and continues throughout the tilting process. In a preferable embodiment, the tapping is initiated after the electric arc furnace has reached an angle such that the EBT is in a substantially vertical orientation (e.g., such that molten metal exits the furnace through a substantially vertically-oriented EBT).

In one embodiment, the angle of the eccentric bottom tap-hole mitigates erosion of the tap-hole over time via, for example, adopting a substantially vertical orientation during tapping. In one embodiment, the angle of the eccentric bottom tap-hole mitigates slag carryover, via, for example, a tilting process in which the tap-hole is gradually tilted from an angled orientation to a substantially vertical orientation.

It is envisaged that the current processes may be adapted to include an additive addition step, in which an additive may be added to the molten metal to minimize slag carryover and/or for modification of the steel product. The additive may be, but is not limited to, a slag foaming agent, a foaming assistor, a slag conditioner, a gas, an other metal, or a combination thereof.

According to a third aspect, the present disclosure relates to a process involving: i) tilting the electric arc furnace, in one or more of its embodiments, containing a molten metal at an electric arc furnace tilting angle; ii) adjusting the bidirectional slide gate valve to control a flow rate of the molten metal from the eccentric bottom tap-hole; and iii) tapping the molten metal into a vessel through the eccentric bottom tap-hole provided on the electric arc furnace, wherein the electric arc furnace tilting angle is substantially equal to the angle of the eccentric bottom tap-hole through the body of the electric arc furnace during the tapping. In one embodiment, the electric arc furnace tilting angle and the angle of the eccentric bottom tap-hole are from 5° to 45°, preferably from 10° to 40°, more preferably from 15° to 35°, or more preferably from 15° to 25°.

In one embodiment, a time required to tilt the electric arc furnace to an electric arc furnace tilting angle that is substantially equal to the angle of the eccentric bottom tap-hole is less than 80%, preferably less than 70%, or more preferably less than 60% of the total time necessary to complete the tapping.

In one embodiment, the bidirectional slide gate valve may be used to prevent molten metal transfer from the furnace, even when the furnace is tilted at an angle that is suitable for tapping. In one embodiment, the bidirectional slide gate valve is used to control the rate of flow through the eccentric bottom tap-hole. In one embodiment, the flow rate (whether adjusted via operation of the bidirectional slide gate valve or otherwise) ranges from 30 to 60 tons/minute, preferably 35 to 55 tons/minute, or more preferably 40 to 50 tons/minute. In one embodiment, at least 40%, preferably at least 50%, more preferably at least 60%, or even more preferably at least 70% of the molten metal transferred from the furnace during tapping passes through the eccentric bottom tap-hole when the eccentric bottom tap-hole is in a substantially vertical orientation.

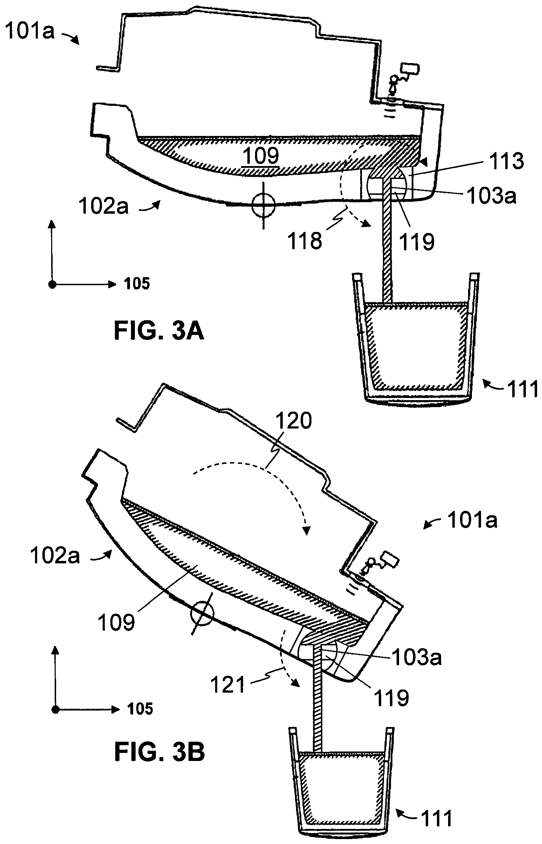

Referring now to FIGs. 3A and 3B, shown is an electric arc furnace 101a, which can be substantially similar to electric arc furnace 101, with the primary exceptions described below. Furnace 101a can comprise an eccentric bottom tap-hole 103a that is pivotable (e.g., generally in a direction indicated by arrow 118) relative to furnace body 102a. For example, tap-hole 103a can be defined by a body 119 that can be pivotally coupled to furnace body 102a. Pivotal coupling of body 119 to furnace body 102a can be accomplished in any suitable fashion, such as, for example, via curved (e.g., cylindrical, spherical, and/or the like) bearing surfaces disposed at an interface of body 119 and furnace body 102a and on which body 119 can slide relative to furnace body 102a, via a rod, pin, and/or the like coupled between body 119 and furnace body 102a and around which body 119 and/or furnace body 102a can pivot, via one or more hinges, and/or the like. Rotation of body 119 relative to furnace body 102a can be facilitated by a weight of body 119, a weight of molten metal acting on body 119, one or more actuators coupled to body 119, and/or the like.

To illustrate, as furnace 101a is rotated relative to horizontal plane 105 in a first direction (e.g., 120) (e.g., during tapping), tap-hole 103a can rotate relative to the horizontal plane in a second direction (e.g., 121) that is opposite to the first direction. In these ways and others, tap-hole 103a may be capable of maintaining a substantially vertical orientation as furnace 101a is tilted over a range of angles (e.g., during at least a majority of a tapping operation), which may mitigate erosion of the tap-hole, slag carryover, and/or the like.

The above specification and examples provide a complete description of the structure and use of illustrative embodiments. Although certain embodiments have been described above with a certain degree of particularity, or with reference to one or more individual embodiments, those skilled in the art could make numerous alterations to the disclosed embodiments without departing from the scope of this invention. As such, the various illustrative embodiments of the methods and systems are not intended to be limited to the particular forms disclosed. Rather, they include all modifications and alternatives falling within the scope of the claims, and embodiments other than the one shown may include some or all of the features of the depicted embodiment. For example, elements may be omitted or combined as a unitary structure and/or connections may be substituted. Further, where appropriate, aspects of any of the examples described above may be combined with aspects of any of the other examples described to form further examples having comparable or different properties and/or functions, and addressing the same or different problems. Similarly, it will be understood that the benefits and advantages described above may relate to one embodiment or may relate to several embodiments.

The claims are not intended to include, and should not be interpreted to include, means-plus- or step-plus-function limitations, unless such a limitation is explicitly recited in a given claim using the phrase(s) "means for" or "step for," respectively.

## Claims

1. An electric arc furnace (101) comprising:
a body (102) comprising an eccentric bottom tap-hole (103) which connects an inner surface of the body (102) through a top aperture to an outer surface of the body (102) through a bottom aperture, and a tilting device which tilts the body (102) of the electric arc furnace (101) to an electric arc furnace tilting angle,
wherein an angle of the eccentric bottom tap-hole (103) through the body (102) is greater than 15° and less than 50° and wherein the angle of the bottom tap-hole (103) through the body (102) is defined with respect to an axis (107) that is perpendicular to the bottom surface of the body (102).

2. The electric arc furnace (101) of claim 1, wherein the angle of the bottom tap-hole (103) through the body (102) is greater than 15° and less than 35°.

3. The electric arc furnace (101) of claim 1, wherein the eccentric bottom tap-hole (103) has a longest length of 80 to 120 cm.

4. The electric arc furnace (101) of claim 1, wherein the eccentric bottom tap-hole (103) is in the form of a cylinder, where the top aperture and the bottom aperture have substantially the same diameter.

5. The electric arc furnace (101) of claim 4, wherein the cylindrical eccentric bottom tap-hole (103) has a diameter of about 10 to 30 cm.

6. The electric arc furnace (101) of claim 1, wherein the eccentric bottom tap-hole (103) is in the form of a cone, where the top aperture has a diameter that is larger than a diameter of the bottom aperture.

7. The electric arc furnace (101) of claim 1, further comprising a bidirectional slide gate valve (108) located on the outer surface of the body proximal to the eccentric bottom tap-hole (103), wherein the bidirectional slide gate valve (108) is configured to adjust the bottom aperture of the eccentric bottom tap-hole (103).

8. The electric arc furnace (101) of claim 1, further comprising a sensor (112) for detecting a level of a molten metal (109) disposed above the eccentric bottom tap-hole (103).

9. The electric arc furnace (101) of claim 1, wherein the eccentric bottom tap-hole (103) is disposed in a removable unit (113) that is configured to be releasably attached to the body (102) to form a seal, where, optionally, when the removable unit (113) is attached to the body (102), an inner surface of the removable unit (113) is flush with the inner surface of the body (102) and/or an outer surface of the removable unit (113) is flush with the outer surface of the body (102).

10. The electric arc furnace (101) of claim 1, wherein the eccentric bottom tap-hole (103) is pivotable relative to body (102).

11. A process comprising:
tilting the electric arc furnace (101) of claim 1 containing a molten metal (109) at an electric arc furnace tilting angle;
tapping the molten metal (109) into a vessel (111) through the eccentric bottom tap-hole (103) provided on the electric arc furnace (101),
wherein the electric arc furnace tilting angle is substantially equal to the angle of the eccentric bottom tap-hole (103) through the body (102) of the electric arc furnace (101) during the tapping, wherein the electric arc furnace tilting angle and the angle of the eccentric bottom tap-hole (103) are from 15° to 35°.

12. The process of claim 11, wherein the molten metal (109) comprises steel.

13. The process of claim 11, wherein a time required to tilt the electric arc furnace (101) to an electric arc furnace tilting angle that is substantially equal to the angle of the eccentric bottom tap-hole (103) is less than 80% of the total time necessary to complete the tapping.

14. The process of claim 11, wherein at least 40% of the molten metal (109) passes through a substantially vertically-oriented eccentric bottom tap-hole (103) during the tapping.

15. The process of claim 11, wherein the electric arc furnace (101) of claim 7 is used , the process comprising:
adjusting the bidirectional slide gate valve (108) to control a flow rate of the molten metal (109) through the eccentric bottom tap-hole (103).

## Patentansprüche

1. Lichtbogenofen (101), der Folgendes umfasst:
einen Körper (102), der ein exzentrisches Bodenabstichloch (103) aufweist, das eine Innenfläche des Körpers (102) durch eine obere Öffnung mit einer Außenfläche des Körpers (102) durch eine untere Öffnung verbindet, und eine Kippvorrichtung, die den Körper (102) des Lichtbogenofens (101) auf einen Lichtbogenofen-Kippwinkel kippt,
wobei ein Winkel des exzentrischen Bodenabstichlochs (103) durch den Körper (102) größer als 15° und kleiner als 50° ist, und wobei der Winkel des Bodenabstichlochs (103) durch den Körper (102) in Bezug auf eine Achse (107) definiert ist, die senkrecht zu der Bodenfläche des Körpers (102) ist.

2. Lichtbogenofen (101) nach Anspruch 1, wobei der Winkel des Bodenabstichlochs (103) durch den Körper (102) größer als 15° und kleiner als 35° ist.

3. Lichtbogenofen (101) nach Anspruch 1, wobei das exzentrische Bodenabstichloch (103) eine größte Länge von 80 bis 120 cm hat.

4. Lichtbogenofen (101) nach Anspruch 1, wobei das exzentrische Bodenabstichloch (103) die Form eines Zylinders hat, dessen obere Öffnung und untere Öffnung im Wesentlichen den gleichen Durchmesser haben.

5. Lichtbogenofen (101) nach Anspruch 4, wobei das zylindrische exzentrische Bodenabstichloch (103) einen Durchmesser von etwa 10 bis 30 cm hat.

6. Lichtbogenofen (101) nach Anspruch 1, wobei das exzentrische Bodenabstichloch (103) die Form eines Kegels hat, dessen obere Öffnung einen Durchmesser hat, der größer als ein Durchmesser der unteren Öffnung ist.

7. Lichtbogenofen (101) nach Anspruch 1, der ferner einen bidirektionalen Absperrschieber (108) aufweist, der sich an der Außenfläche des Körpers proximal zu dem exzentrischen Bodenabstichloch (103) befindet, wobei der bidirektionale Absperrschieber (108) dazu ausgelegt ist, die untere Öffnung des exzentrischen Bodenabstichlochs (103) einzustellen.

8. Lichtbogenofen (101) nach Anspruch 1, der ferner einen Sensor (112) aufweist, um einen Pegel einer Metallschmelze (109), die über dem exzentrischen Bodenabstichloch (103) angeordnet ist, zu erkennen.

9. Lichtbogenofen (101) nach Anspruch 1, wobei das exzentrische Bodenabstichloch (103) in einer abnehmbaren Einheit (113) angeordnet ist, die dazu ausgelegt ist, lösbar am Körper (102) angebracht zu sein, um eine Dichtung zu bilden, bei der optional, wenn die abnehmbare Einheit (113) am Körper (102) angebracht ist, eine Innenfläche der abnehmbaren Einheit (113) bündig mit der Innenfläche des Körpers (102) ist und/oder eine Außenfläche der abnehmbaren Einheit (113) bündig mit der Außenfläche des Körpers (102) ist.

10. Lichtbogenofen (101) nach Anspruch 1, wobei das exzentrische Bodenabstichloch (103) relativ zum Körper (102) schwenkbar ist.

11. Verfahren, das Folgendes umfasst:
Kippen des Lichtbogenofens (101) nach Anspruch 1, der eine Metallschmelze (109) enthält, in einem Lichtbogenofen-Kippwinkel;
Abstechen der Metallschmelze (109) in ein Gefäß (111) durch das exzentrische Bodenabstichloch (103), das am Lichtbogenofen (101) vorgesehen ist,
wobei der Lichtbogenofen-Kippwinkel im Wesentlichen gleich dem Winkel des exzentrischen Bodenabstichlochs (103) durch den Körper (102) des Lichtbogenofens (101) während des Abstichs ist, wobei der Lichtbogenofen-Kippwinkel und der Winkel des exzentrischen Bodenabstichlochs (103) zwischen 15° und 35° betragen.

12. Verfahren nach Anspruch 11, wobei die Metallschmelze (109) Stahl enthält.

13. Verfahren nach Anspruch 11, wobei eine Zeit, die erforderlich ist, um den Lichtbogenofen (101) auf einen Lichtbogenofen-Kippwinkel zu kippen, der im Wesentlichen gleich dem Winkel des exzentrischen Bodenabstichlochs (103) ist, kürzer als 80 % der Gesamtzeit ist, die notwendig ist, um den Abstich abzuschließen.

14. Verfahren nach Anspruch 11, wobei mindestens 40 % der Metallschmelze (109) während des Abstichs durch ein im Wesentlichen vertikal orientiertes exzentrisches Bodenabstichloch (103) passiert.

15. Verfahren nach Anspruch 11, wobei der Lichtbogenofen (101) nach Anspruch 7 verwendet wird und das Verfahren Folgendes umfasst:
Einstellen des bidirektionalen Absperrschiebers (108), um eine Durchflussrate der Metallschmelze (109) durch das exzentrische Bodenabstichloch (103) zu steuern.

## Revendications

1. Four à arc électrique (101) comprenant :
un corps (102) comprenant un trou de coulée de fond excentré (103) qui relie une surface interne du corps (102) par une ouverture supérieure à une surface externe du corps (102) par une ouverture inférieure, et un dispositif d'inclinaison qui incline le corps (102) du four à arc électrique (101) jusqu'à un angle d'inclinaison de four à arc électrique,
dans lequel un angle du trou de coulée de fond excentré (103) à travers le corps (102) est supérieur à 15° et inférieur à 50° et dans lequel l'angle du trou de coulée de fond (103) à travers le corps (102) est défini par rapport à un axe (107) qui est perpendiculaire à la surface de fond du corps (102).

2. Four à arc électrique (101) de la revendication 1, dans lequel l'angle du trou de coulée de fond (103) à travers le corps (102) est supérieur à 15° et inférieur à 35°.

3. Four à arc électrique (101) de la revendication 1, dans lequel le trou de coulée de fond excentré (103) a une longueur maximale de 80 à 120 cm.

4. Four à arc électrique (101) de la revendication 1, dans lequel le trou de coulée de fond excentré (103) se présente sous la forme d'un cylindre, où l'ouverture supérieure et l'ouverture inférieure ont sensiblement le même diamètre.

5. Four à arc électrique (101) de la revendication 4, dans lequel le trou de coulée de fond excentré (103) a un diamètre d'environ 10 à 30 cm.

6. Four à arc électrique (101) de la revendication 1, dans lequel le trou de coulée de fond excentré (103) se présente sous la forme d'un cône, où l'ouverture supérieure à un diamètre qui est plus grand qu'un diamètre de l'ouverture inférieure.

7. Four à arc électrique (101) de la revendication 1, comprenant en outre une vanne tiroir bidirectionnelle (108) située sur la surface externe du corps à proximité du trou de coulée de fond excentré (103), la vanne tiroir bidirectionnelle (108) étant configurée pour régler l'ouverture inférieure du trou de coulée de fond excentré (103).

8. Four à arc électrique (101) de la revendication 1, comprenant en outre un capteur (112) pour détecter un niveau d'un métal fondu (109) disposé au-dessus du trou de coulée de fond excentré (103).

9. Four à arc électrique (101) de la revendication 1, dans lequel le trou de coulée de fond excentré (103) est disposé dans une unité amovible (113) qui est configurée pour être fixée de façon détachable au corps (102) pour former un joint d'étanchéité, où, éventuellement, quand l'unité amovible (113) est fixée au corps (102), une surface interne de l'unité amovible (113) est au ras de la surface interne du corps (102) et/ou une surface externe de l'unité amovible (113) est au ras de la surface externe du corps (102).

10. Four à arc électrique (101) de la revendication 1, dans lequel le trou de coulée de fond excentré (103) peut pivoter par rapport au corps (102).

11. Procédé comprenant :
l'inclinaison du four à arc électrique (101) de la revendication 1 contenant un métal fondu (109) à un angle d'inclinaison de four à arc électrique ;
la coulée du métal fondu (109) dans une cuve (111) par le trou de coulée de fond excentré (103) disposé sur le four à arc électrique (101),
dans lequel l'angle d'inclinaison de four à arc électrique est sensiblement égal à l'angle du trou de coulée de fond excentré (103) à travers le corps (102) du four à arc électrique (101) pendant la coulée, l'angle d'inclinaison de four à arc électrique et l'angle du trou de coulée de fond excentré (103) allant de 15° à 35°.

12. Procédé de la revendication 11, dans lequel le métal fondu (109) comprend de l'acier.

13. Procédé de la revendication 11, dans lequel un temps nécessaire pour incliner le four à arc électrique (101) jusqu'à un angle d'inclinaison de four à arc électrique qui est sensiblement égal à l'angle du trou de coulée de fond excentré (103) est inférieur à 80 % du temps total nécessaire pour achever la coulée.

14. Procédé de la revendication 11, dans lequel au moins 40 % du métal fondu (109) passe à travers un trou de coulée de fond excentré (103) orienté de façon sensiblement verticale pendant la coulée.

15. Procédé de la revendication 11, dans lequel le four à arc électrique (101) de la revendication 7 est utilisé, le procédé comprenant :
le réglage de la vanne tiroir bidirectionnelle (108) pour réguler un débit du métal fondu (109) à travers le trou de coulée de fond excentré (103).
